# EUROPEAN PATENT SPECIFICATION

(11) **EP 2 438 806 B1**
(45) Date of publication and mention of the grant of the patent: **04.09.2013**
(21) Application number: 11184287.8
(22) Date of filing: 07.10.2011
(51) Int. Cl.: A01D 46/26

(54) **Motive device for shaking rods of a harvesting machine**
Vorrichtung zum Schütteln der Stäbe einer Erntemaschine
Appareil pour secouer les tiges d'une machine à récolter

(30) Priority: 08.10.2010 IT VR20100195
(43) Date of publication of application: 11.04.2012
(73) Proprietor: Pichler, Wilhelm, 39057 Appiano sulla Strada del Vino, Bolzano (IT)
(72) Inventor: Pichler, Wilhelm, 39057 Appiano sulla Strada del Vino, Bolzano (IT)
(74) Representative: Marchi, Paolo

(56) References cited:
- EP-A2- 1 621 063
- WO-A1-2006/024883
- WO-A2-2007/129207
- DE-A1- 3 507 545
- US-A- 3 651 627

## Description

The present disclosure generally refers to the field of apparatuses for agricultural or forestry use. In particular, the present disclosure refers to a motive device for shaking rods, e.g. for a harvesting machine.

The problem of rapidly and effectively harvesting ripened fruits in a fruit orchard or a similar cultivation is known in the art. In the light of the laboriousness of a manual harvesting operation and of the cost of labour, machines capable of carrying out said harvesting have been developed.

For instance, in the case of small fruits such as raspberries, blackberries or blueberries, machines have been developed which, by going along the rows of fruit-bearing plants, shake the branches and thus cause detaching and fall by gravity of the fruits already ripened. Falling fruits are collected in suitable containers of the machine, thereby obtaining great labour saving.

In various known-art machines, branch shaking is performed by horizontal shaking rods, which are comb-like aligned so as to cover a certain interval in height and are set in motion by suitable motive systems: in some machines, the shaking rods are set in unidirectional rotation around a vertical axis, so as to periodically hit the plant branches during said rotation; in other machines, the shaking rods are set into oscillation with a to-and-fro motion, during which they strike plant branches. Some examples of known-art machines are described in international patent application no. WO 2007/129207, disclosing a portable electric device for harvesting small fruits by shaking the plants, in international patent application no. WO 2006/024883, disclosing a device for the picking of fruit by shaking of branches, and in German patent application no. DE 35 07 545, disclosing a device for the harvesting of olives by shaking olive trees.

However, known-art machines entail some drawbacks still unsolved.

Shaking rod motive systems, which are used in known machines, are often scarcely flexible in adapting the motion of the shaking rods to plants features, in particular to their size and rigidity.

In fact, it should be considered that fruit-bearing plants in a same row are not all identical to each other, but on the contrary they have ages, heights, lateral dimensions, projections and branch diameter that are different from each other.

A harvesting machine, which is not capable of adapting to the specific plant, risks hitting the latter with an excessive force, thereby damaging the plant, or with too weak a force, thereby performing an incomplete harvesting.

Moreover, known-art machines have low or no possibility of adjusting the shaking force and frequency; such an adjusting possibility would instead be convenient for selecting the degree of ripening of harvested fruits, so that those not sufficiently ripe may remain on the plant, awaiting for the next harvesting.

In addition, motive systems for shaking rods in the known-art machines are often complex from a mechanical and operating standpoint, costly and of difficult maintenance.

Therefore, the known art shows the need to improve the existing harvesting machines, and in particular the motive systems for shaking rods.

Therefore, the present disclosure stems from the technical problem of providing a motive device for shaking rods which allows to overcome at least one of the drawbacks mentioned above with reference to the known art, and/or attain further advantages.

This is obtained by providing a motive device according to independent claim 1. The solution to the technical problem is also provided by a shaking unit according to claim 14 and by a harvesting machine according to claim 17.

Secondary features of the subject of the present disclosure are defined in the corresponding dependent claims.

The subject of the present disclosure provides some relevant advantages.

A first advantage lies in that the motive device and the shaking unit according to the present disclosure are of simple and sturdy construction, as well as of simple maintenance.

The solution concept at the basis of the present disclosure is that of providing a motive arm for shaking rods, wherein the arm is pivoted on a support body and is rotated in a reciprocating motion: the arm is rotated in a first sense by a first motor apparatus through a cam wheel and is returned in an opposite sense by a second motor apparatus, or counter motor apparatus, which e.g. comprises elastic return means such as a spring.

The combined action of the first motor apparatus and of the second motor apparatus causes the arm to perform a swinging reciprocating motion, i.e. a to-and-fro motion, which is transmitted to the shaking rods; the shaking rods strike a plant according to a corresponding shaking frequency.

The swinging frequency is easily adjustable by the user, by selecting a wheel with a suitable number of cams and/or varying the rate of the motor connected to the wheel. The shaking force is adjustable by acting on the second motor apparatus, e.g. by selecting a spring with an appropriate modulus of elasticity (i.e. with appropriate rigidity) and/or by varying its fixing point on the arm, so as to set it in a more or less pre-tensioned state.

Moreover, the intensity of interaction between the arm in motion and a plant also depends on the return force of the second motor apparatus; e.g., the suitable selection of the rigidity of the spring and of its pre-tensioning level enables to select to what extent the shaking rods are able to adapt their motion to plants features.

A second advantage therefore lies in the versatility of use and in the possibility of simply and effectively adjusting the operation features of the machine, to adapt it to the specific plants subjected to harvesting and/or to the desired degree of ripening for the fruits. Moreover, this adjustment possibility enables to minimize the risk of damaging the plants.

In an embodiment, the cam wheel is moved by a motor which is mounted on the same support body onto which the arm is pivoted. This is advantageous for the compactness of the motive device; for instance, the need of a drive between motor and cam wheel is avoided, and the cam wheel can be mounted directly on the motor shaft.

In an embodiment, the support body is hinged at a load-bearing framework of the motive device or of the harvesting machine. This configuration is advantageous, because it adds a further degree of freedom for the arm: besides its motion relative to the support body, also the motion of the support body relative to the framework is added.

Said further degree of freedom allows to have another operative parameter on which to act in order to adapt machine operation to plants features. Moreover, this constitutes an additional defence against the risk of damaging the plant, when the trunk of the latter impacts against the arm: in fact, the further degree of freedom enables the arm to perform an additional rotation for freeing itself from its being stuck to the trunk.

In particular, a return apparatus is provided, e.g. having an elastic behavior; the return apparatus is configured for angularly moving the support body relative to the load-bearing framework in a third angular motion; basically, the return apparatus returns the support body towards a first angular position or angular configuration relative to the framework. This enables to prevent the support body from stopping in a position at which the shaking rods lose contact with the plant or perform an ineffectual shaking. In fact, the return apparatus ensures that the support body and the arm pivoted thereto be returned towards a position in which the shaking is effectual and the harvesting is effective.

In order to improve the above-mentioned adjustment possibility, in an embodiment it is provided that the return apparatus connects the support body to a member which is displaceable relative to a framework region at which the support body is hinged; e.g., the displacement of the displaceable member or slider causes a deformation of the elastic means of the return apparatus and therefore a variation of the first angular configuration of the support body. This enables to modify and adjust the dynamic behaviour of the arm in operation.

In particular, the pivot axis of the arm and the hinge axis of the support body are substantially parallel to each other.

Moreover, the first sense of rotation of the arm can be concordant with the return sense of the second elastic means acting on the support body. As will be made evident in the following detailed description, this allows to have an operation which is particularly effective from the standpoint both of the plant shaking and of the adaptability of the shaking machine to the plant.

In an embodiment, the arm is pivoted on the support body through a multidirectional articulated joint. Besides the above-mentioned swinging motion, this allows further motions of the shaking rods (e.g., a variation of the tilt of the comb formed by the rods) for adapting to the shape of the plant and for a less rigid interaction with the latter.

Further advantages, features and the operation steps of the subject of the present disclosure will be made evident in the following detailed description of an embodiment thereof, given by way of example and not for limitative purposes. However, it is evident that each embodiment of the subject of the present disclosure may have one or more of the advantages listed above; in any case, however, it is not required for each embodiment to concomitantly have all of the advantages listed.

It is also to be understood that all possible combinations of the aforeindicated embodiments, and of those described with reference to the following detailed description, fall within the scope of the present disclosure.

Reference will be made to the figures of the annexed drawings, wherein:
- Figure 1 shows a front perspective view of a harvesting machine according to the present disclosure, associated with a tractor during a harvesting step;
- Figure 2 shows a rear perspective view of an enlarged detail of the harvesting machine of Figure 1;
- Figure 3 shows a front perspective view of a component of the detail of Figure 2;
- Figure 4 shows a front perspective view of an enlarged detail of the harvesting machine of Figure 1;
- Figure 5 shows a front perspective view of the detail of Figure 4, further enlarged;
- Figure 6 shows a rear perspective view of the detail of Figure 5;
- Figures 7A and 7B show, in a simplified view from the top, two different operating positions of the detail of Figure 5;
- Figures 8A and 8B show, in a simplified view from the top, two different operating positions of the detail of Figure 5 in an assembly alternative;
- Figure 9 shows, in a partially sectional side view along section line IX-IX, a detail of the alterantive of Figures 8A and 8B in an assembling stage;
- Figure 10 shows a rear perspective view of the detail of Figure 5, for a different embodiment.

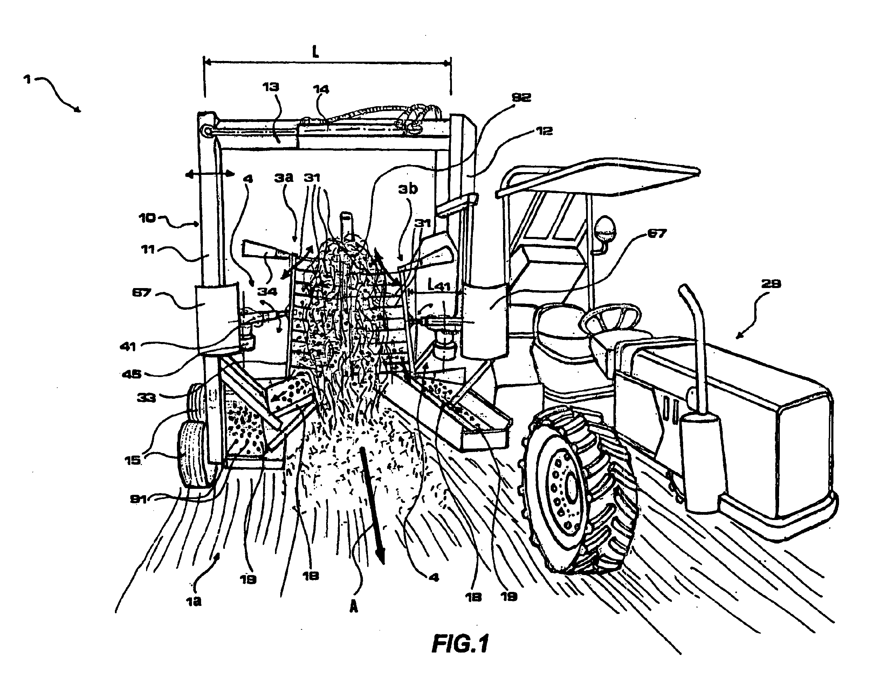

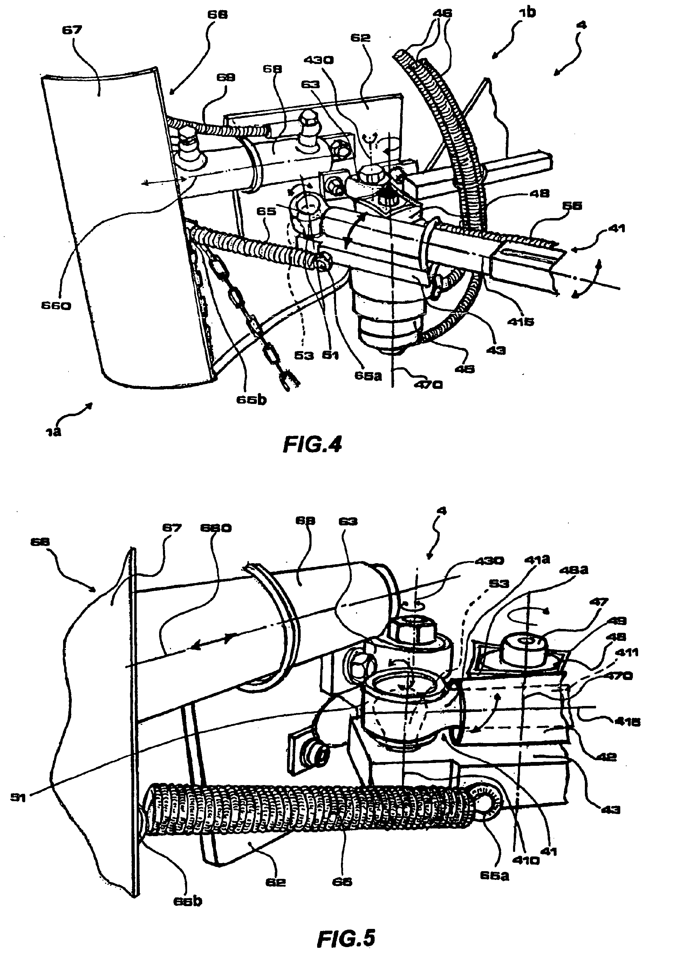

Referring initially to Figures 1 to 9, an embodiment, according to the present disclosure, of a harvesting machine comprising shaking units including a motive device for shaking rods is shown. The harvesting machine is denoted by reference number 1, each shaking unit is denoted by reference number 3 and the respective motive device is generally denoted by reference number 4.

To be more specific, the harvesting machine 1 is suitable for the harvesting of small fruits 91 (in the specific case, raspberries) from plants 92 cultivated in rows.

The harvesting machine 1 comprises a portal-shaped frame 10, in other words substantially having an upturned U-shape. The portal-shaped frame 10 is mounted on wheels 15 and can be associated with an agricultural tractor 29; in particular, the portal-shaped frame 10 is arranged aside the tractor 29, so as to be moved along a row of plants 92 according to an advancement direction A. During a harvesting step the portal-shaped frame 10 is placed astride the row of plants 92, so that during motion of the machine 1 each plant 92, in sequence, be in a central region of the portal 10 and be shaken by the shaking units 3, which cause the detaching and falling of the fruits 91. With reference to the advancement direction A, the harvesting machine 1 has a front or anterior face 1a, which is an inlet region of the plant 92 into the portal 10, and a rear or posterior face 1 b, which is an outlet region of the plant 92 from the portal 10.

In the example, the portal-shaped frame 10 comprises two opposite vertical sides 11, 12 joined by a top side 13. The sides 11, 12, 13 are preferably formed by metal beams. The wheels 15 are mounted in the bottom region of the external vertical side 11. The internal vertical side 12 is fixed to the agricultural tractor 29 by a bracket, an arm or other connection system (not shown). The means for fixing the portal-shaped frame 10 to the tractor 29 can also include a hydraulic piston (not shown) for lifting or lowering the frame 10 relative to the ground, in order to facilitate transport of the harvesting machine 1 when not in use, or to operate on particularly high plants 92; moreover, a hydraulic piston may be provided to laterally displace the portal-shaped frame 10, i.e. to vary its distance from the side of the tractor 29.

Preferably, the top side 13 is a telescopic beam and comprises an apparatus for varying its length, like e.g. a hydraulic piston 14. Thanks to this, it is possible to vary the distance L between the opposite vertical sides 11 and 12 and therefore adjust the width L of the portal 10 for adapting it to the width of the row and to the lateral dimensions of the plants 92.

The harvesting machine 1 comprises two shaking units 3, respectively associated with the opposite sides 11, 12 of the portal-shaped frame 10. As it will be better described hereinafter, each shaking unit 3 comprises a plurality of comb-like arranged shaking rods 31, which extend towards the central region of the portal 10 and therefore towards the plant 92. Each shaking rod 31 has a substantially horizontal direction of development. The two shaking units 3 and their shaking rods 31 are thus arranged so as to strike a plant 92 simultaneously from two opposite sides.

The fruits 91 detaching from the plant 92 due to shaking fall on suitable chutes or inclined planes 18 placed under the shaking units 3; the fruits 91 slide on the chutes 18 and are collected into tanks 19 in the bottom region of the vertical sides 11, 12.

Preferably, the chutes 18 are made of a flexible material (e.g., of rubber), so as not to damage the trunk of the plant 92 when they contact it. Moreover, the use of a dampening material, like e.g. rubber, enables to minimize or prevent the damaging of fruits 91 caused by impacting on the chute 18.

The collection tanks 19 are preferably removable, so that the collected fruits 91 can be easily transferred into a storeroom.

Each shaking unit 3 comprises a plurality of shaking rods 31 and a motive device 4 thereof. The shaking rods 31 are, for example, bars of metal (iron or steel) having a length L31 of 60 cm and a diameter S31 of 6 mm. The shaking rods 31 are mounted, with a comb-like arrangement, on an elongated base 33, which e.g. is a metal profile. The base 33 is mounted, by means of a suitable support or bracket 35, on a motive arm 41; in the embodiment shown, the elongated base 33 is fixed to an end 41b of the motive arm 41. In particular, the bracket 35 is in a central region of the base 33 and therefore the comb-like arrangement is symmetrical relative to the arm 41.

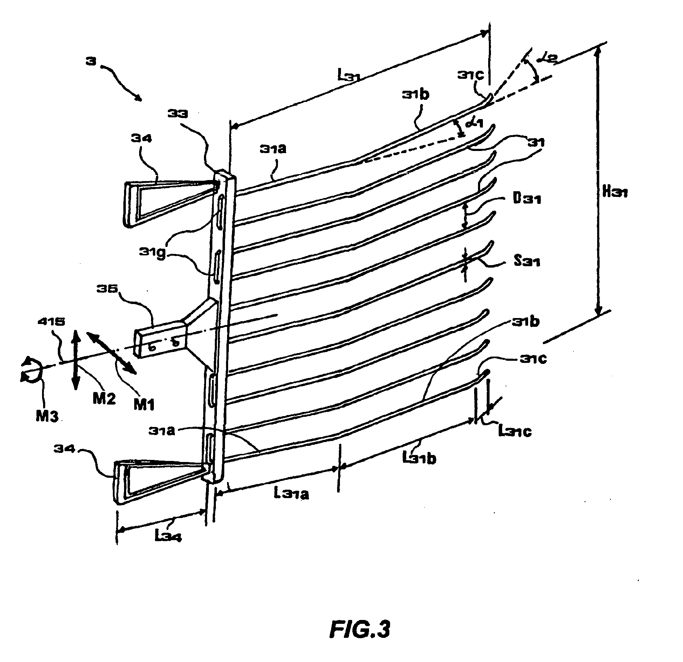

In the embodiment shown in the figures (and in detail in Figure 3), each shaking rod 31 comprises a first initial section 31 a departing from the base 33, a second intermediate section 31b which is tilted (in a plan view on a horizontal plane) relative to the first section 31 a, and a third final section 31 c which is tilted (in a plan view on a horizontal plane) relative to the second intermediate section 31 b.

The first section 31 a has a length L31 a of 22 cm, the second section 31 b has a length L31b of 35 cm and the third section 31c has a length L31c of 3 cm. The second section 31 b is tilted with an angle α1 of 15 degrees relative to the first section 31 a, whereas the third section 31 c is tilted with an angle α2 of 15 degrees relative to the second section 31b; the second section 31 b and the third section 31c are tilted towards the rear region 1b of the harvesting machine 1. In the example, ten shaking rods 31 are provided for each shaking unit 3; the rods 31 are parallel to each other and spaced the one from the other with a distance D31 of 7.5 cm, for a total height H31 of 68 cm.

In the embodiment shown, the shaking rods 31 are integral in pairs, i.e. two successive rods 31 are obtained from a single bar bent into a U shape, thereby defining a connecting section 31 g between the two successive rods 31. The rods 31 are inserted into suitable through holes made in the base 33 and the connecting section 31 g abuts against a face of the base 33 (in particular, the face which faces the motive arm 41). Thus, the rods 31 are merely inserted into the base 33 and are held in position without any need to use other fastening means.

Preferably, the through holes have a diameter approximately double the diameter S31 of the rods 31, so that the latter may oscillate with a certain play relative to the base 33.

Moreover, two wings 34 are provided, each arranged at a respective end of the base 33 and extending in an opposite direction to the shaking rods 31, with a length L34 of 30 cm.

The arm 41, which is part of the motive device 4, has a first portion 41 a (in particular, an end of the arm) which is pivoted on a support body 43, and a second portion 41 b (in particular, the other end of the arm) which is fixed to the bracket 35 and therefore bears the plurality of shaking rods 31.

Relative to the support body 43, the arm 41 can carry out an angular motion or rotation around a main axis of rotation 410, or pivot axis. The axis of rotation 410 is orthogonal to the longitudinal direction of development 415 of the arm 41; in other words, the arm 41 extends in a substantially radial direction relative to the pivot axis 410.

In the embodiment shown, the arm 41 is pivoted on the support body 43 through a multidirectional articulated joint, like e.g. a spherical joint having a spherical stud 53 fixed to the support body 43 and a corresponding lead nut 51 fixed to the first end 41 a of the arm 41. Besides rotation about the main axis 410, the arm 41 can therefore carry out secondary motions, as it will be made evident hereinafter.

The motive device 4 further comprises a first motive or motor apparatus (or member), which in the example includes a motor 45 connected to a rotary shaft 47, to which a cam wheel 48 is associated; the cam wheel 48 has at least one cam 49. In the example, the motor 45 is of hydraulic or oil-dynamic type; tubes 46 are connected to the motor 45 for circulation of a working fluid (in particular, oil); the working fluid is circulated by a pump (not shown) provided with a suitable command and control system. These aspects related to a hydraulic motor are substantially within the reach of a person skilled in the art and are not described further.

In the embodiment shown, the rotary shaft 47 is the motor shaft; in alternative embodiments a drive (e.g., a belt drive or a gear drive) may be provided between the rotary shaft 47 and the motor shaft.

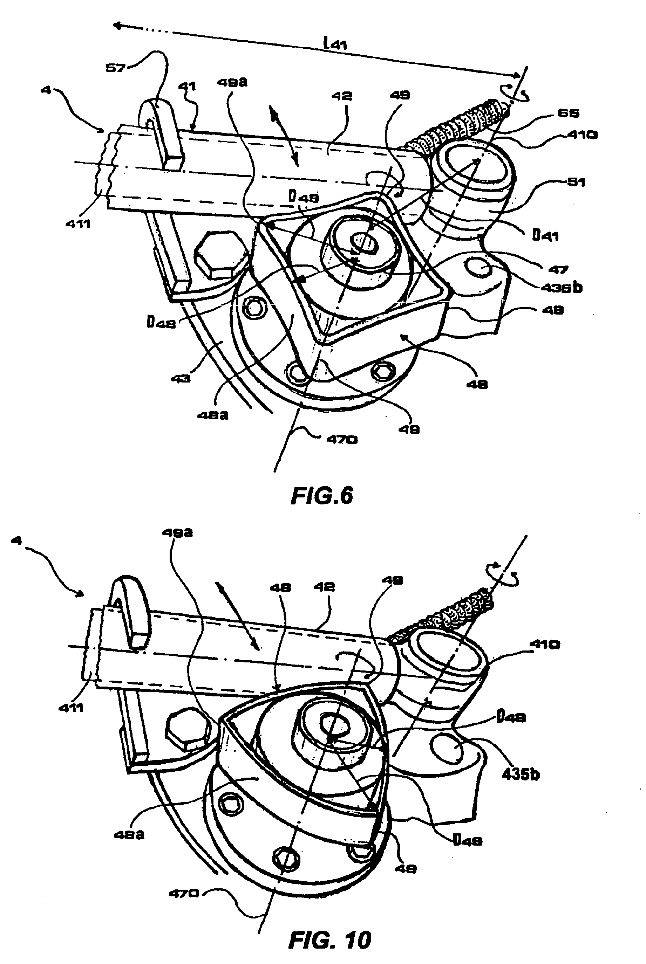

The cam wheel 48 is mounted on the rotary shaft 47, so as to be set in rotation by the latter. In the embodiment shown in Figures 1 to 9, the wheel 48 has four cams or lobes 49, i.e. it has a substantially quadrangular shape. In an alternative embodiment, shown in Figure 10, the wheel 48 has three cams or lobes 49, i.e. it has a substantially triangular shape. Of course, depending on the specific needs, the wheel 48 may be made with a different number of lobes 49.

The rotary shaft 47 and the motor 45 are mounted on the support body 43, so that the cam wheel 48 contacts the arm 41. In particular, the support body 43 is substantially plate-shaped and has a first face at which the arm 41 is pivoted and facing towards the cam wheel 48, and a second face, opposite to the first one and facing towards the casing of the motor 45. The rotary shaft 47 extends through a through hole in the support body 43.

The cam wheel 48 has a peripheral side surface 48a which faces, and contacts, the side surface of the arm 41, in the example in a region comprised between the first portion or end 41 a and the second portion or end 41 b.

In particular, the axis of rotation 470 of the rotary shaft 47 and of the wheel 48 is substantially parallel to the main pivot axis 410 of the arm 41.

During rotation of the wheel 48, the cams 49 of the latter exert a thrust on the arm 41, rotating it around its pivot axis 410 in a first sense, away from the rotary shaft 47 and the axis 470.

In other words, the cam wheel 48 cooperates with the arm 41 to force an angular motion of the latter in a first sense during a rotation of the rotary shaft 47.

As it is evident from the figures, the thrust is due to the fact that the cusps 49a of the cams 49 have a distance D49 from the axis of rotation 470 of the wheel 48 which is greater than the distance D48 of the remaining side surface 48a from the same axis 470. The point of contact between arm 41 and cam wheel 48 has a distance from the axis of rotation 470 of the latter which is variable during the rotation of the wheel 48, and this causes the angular motion of the arm 41, whose extent is also related to the difference between said distances D48 and D49. In the embodiments shown in Figures 6 and 10, the distance D48 is of 27 mm and the distance D49 is of 40 mm.

The arm 41 comprises a rod-shaped body 411 extending between the first end 41 a and the second end 41b; e.g., the rod-shaped body 411 has a length L41 of 35 cm and is made of iron or of steel. The distance D41 between the pivot axis 410 of the arm 41 and the axis of rotation 470 of the wheel 48 is, e.g., of 10 cm.

In order to prevent wear of the rod-shaped body 411 due to scraping with the cam wheel 48, a removable case 42 is provided. The removable case 42 is arranged in the region contacting the cam wheel 48, so that the removable case 42 is interposed between the rod-shaped body 411 and the cam wheel 48. For instance, the removable case 42 is a tubular or sleeve-like portion which is positioned around the rod-shaped body 411, i.e. the rod-shaped body 411 is inserted into the removable case 42.

In the example, the removable case 42 has a length L42 of 19 cm.

The removable case 42 is made of plastic (e.g. of polyoxymethylene) or of other low-cost material having a sufficient mechanical strength. The removable case 42 protects the rod-shaped body 411 from wear due to scraping with the cam wheel 48, as it prevent the rod-shaped body 411 from directly contacting the cam wheel 48.

In other words, the removable case 42 is a "wear-target" element, i.e. it directly contacts the cam wheel 48 and then it is worn out in lieu of the rod-shaped body 411; when the removable case 42 has been excessively worn out, it is removed and replaced with a new case of the same type.

The motive device 4 further comprises a second motive or motor apparatus, which returns the arm 41 against the cam wheel 48.

The second motor apparatus is configured for acting in a sense opposite to the sense of action of the first motor apparatus. The second motor apparatus is basically a "counter motor" apparatus.

In the example, the second motor apparatus is a motive member which comprises an elastic element, in particular a first helical traction spring 55, having a first end 55a connected to the support body 43 and a second end 55b connected to the arm 41, e.g. to the second end 41 b of the arm 41 or to the bracket 35. The length of the spring 55 is selected so that, when mounted in the motive device 4, it is tensioned by traction in all operating conditions.

The second motor apparatus, i.e. the spring 55, forces an angular motion of the arm 41 around its pivot axis 410, in a second sense opposite to the first sense. In particular, the cam wheel 48 is interposed between the first end 55a of the spring 55 and the pivoted end 41 a of the arm 41.

Therefore, the spring 55 acts in a direction opposite to the cams 49 and pulls the arm 41 so that the latter be always contacting the cam wheel 48. In operation of the motor 45 (which always rotates in the same sense) the arm 41 performs a swinging reciprocating motion around the pivot axis 410: the thrust exerted by the cusp 49a of a cam 49 causes an angular motion of the arm 41 which, when the cusp 49a does not contact the arm 41 any more, is then recovered thanks to the force in the opposite sense exerted by the spring 55, and so on. The swinging frequency of the arm 41 is directly proportional to the rotation rate of the motor 45 and to the number of lobes 49 of the cam wheel 48.

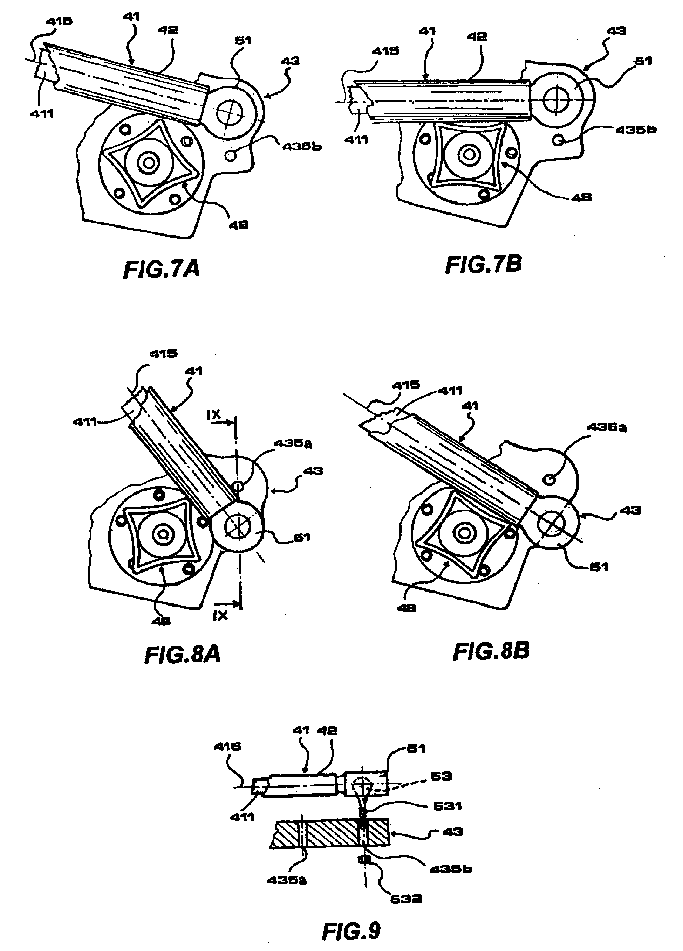

Basically, the arm 41 is pivotable or rotatable in a reciprocating motion between a first angular position (shown in Figure 8A) and a second angular position (shown in Figure 8B) relative to the support body 43. In the first angular position the arm 41 is rotated farther away from the axis of rotation 470 of the wheel 48, with respect to the second angular position in which the arm 41 is rotated nearing to the axis of rotation 470.

The first motor apparatus, through a rotation of the cam wheel 48 and the thrust of the cams 49 on the arm 41, implements a first angular motion of the arm 41, rotating it towards the first angular position. The second motor apparatus, via the spring 55 which returns or biases the arm 41 towards the second angular position, implements a second angular motion of the arm 41, rotating it towards the second angular position. The second angular motion is therefore in a sense opposite to the first angular motion.

In order to limit the extent of the angular motion of the arm 41 in the first sense, in case also an external force, like e.g. that exerted by a plant 92, be acting on said arm, a limiting element 57 is provided, which in the example is a C-shaped bracket fixed to the support body 43 and having a concavity facing towards the side surface of the arm 41. The arm 41 impacts against the C-shaped limiting element 57 when its angular displacement reaches a preset value (which is higher than that forced by the cams 49 of the wheel 48), thereby stopping its travel.

Basically, the limiting element 57 is a stop element which stops the first angular motion of the arm 41 past the first angular position.

In the embodiment shown, the support body 43 is hinged at a load-bearing framework 60, which is associated with (or coincides with) the portal-shaped frame 10. In the example, the load-bearing framework 60 is slidably mounted on a respective vertical side 11, 12 of the portal-shaped frame 10 and its position in height is adjustable through a hydraulic piston 61 positioned between the frame 10 and the framework 60.

The framework 60 comprises a plate 62 to which the support body 43 is hinged through a hinge 63, having a casing 63a fixed to the plate 62 and a pivot 63b rigidly fixed to the support body 43 through a wing 63c.

The support body 43 is therefore hinged to the framework 60 and can rotate relative to it around a hinge axis 430 which is the axis of the pivot 63b.

In particular, said hinge axis 430 is substantially parallel to the main pivot axis 410 of the arm 41 on the support body 43, besides to the axis of rotation 470 of the cam wheel 48. The support body 43 can thus carry out an angular displacement relative to the framework 60, and moreover said angular displacement occurs on a plane parallel to that of the angular motion of the arm 41 relative to the support body 43.

The motive device 4 comprises a return apparatus, in particular elastic means such as a second helical traction spring 65, which is configured for angularly moving the support body 43 relative to the load-bearing framework 60, 62 in a third angular motion.

The return apparatus returns or biases the support body 43 towards a first angular position, or first angular configuration, relative to the framework 60. The first angular configuration corresponds, e.g., to a resting (i.e., non-tensioned) condition of the second spring 65.

Such a first angular configuration provides the support body 43 to be rotated towards the front region 1a and, in the example, it is rotated in the same sense of the first angular motion of the arm 41; in other words, the first angular motion of rotation of the arm 41 is concordant with the sense of the third angular motion of the support body 43, i.e. with the sense in which the return apparatus 65 moves the support body 43 to return it towards the first angular configuration.

The second spring 65 has a first end 65a which is connected to the support body 43, and a second end 65b which is connected to a member 66 of the framework 60.

In the embodiment shown, the member 66 is displaceable relative to the region of framework 60 at which the support body 43 is hinged, i.e. in the example it is displaceable relative to the plate 62. Basically, the displaceable member 66 is a slider.

The slider 66 comprises in particular a shield 67 shaped like a curved plate, which is mounted on the framework 60 through an hydraulic cylinder 68 driven by hydraulic piping 69 and a pump (not shown). Operation of the hydraulic cylinder 68 displaces the shield 67 along a direction 660 which is substantially parallel to the plane of the angular displacement of the support body 43.

The second end 65b of the second spring 65 is fixed to the shield 67. The displacement of the shield 67 causes the displacement of said second end 65b and the variation of the tensioning of the second spring 65: this causes the variation of the return force of the return apparatus and the variation of the first angular configuration towards which the support body 43 is returned. Basically, a displacement of the slider 66 away from the plate 62 rotates the support body 43 in a first sense (corresponding to the return sense in the direction of the front region 1a), whereas a displacement nearing towards the plate 62 partially releases the second spring 65 and rotates the support body 43 in the opposite sense (towards the rear region 1 b).

As it is shown in Figure 1, the shield 67 faces the front region 1a of the machine 1; said shield 67 also serves to protect the motor 45 and the motive device 4 from possible knocks against branches or the like.

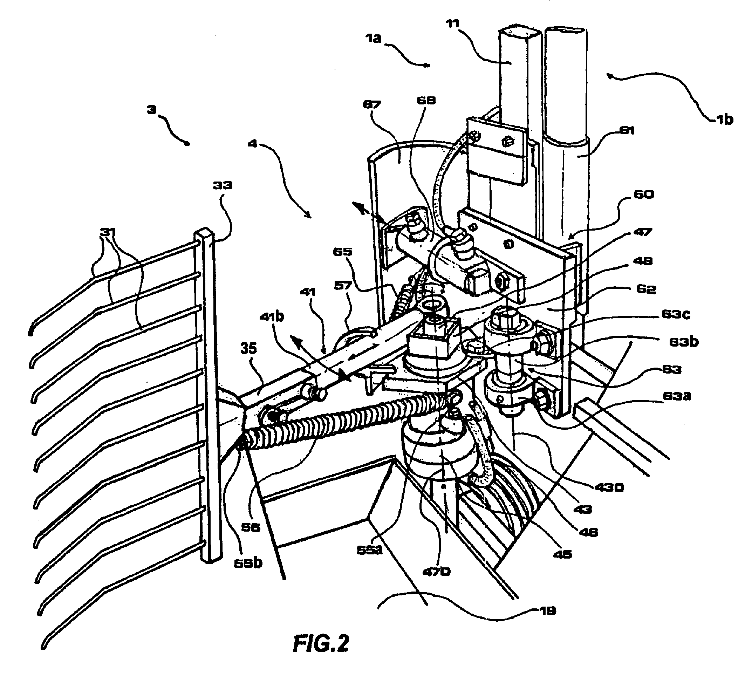

As already mentioned in the foregoing, the shaking machine 1 comprises two shaking units 3 arranged on opposite sides of the portal-shaped frame 10: a first shaking unit 3a is associated with the external vertical side 11 (and it is the shaking unit depicted in Figures 2 to 7); a second shaking unit 3b is associated with the internal vertical side 12 and is arranged specularly to the first shaking unit 3a.

The shaking rods 31 extend towards the central region of the portal-shaped frame 10 and have a length L31 such that, in a non-operating resting condition when the support bodies 43 are in the first angular configuration, the shaking rods 31 of the first shaking unit 3a intersect the shaking rods 31 of the second shaking unit 3b.

In the example, the arms 41 and the shaking rods 31, as well as the displacement axes 660 (with a to 1a - fro 1b direction) of the shields 67, are substantially horizontal; the rotation axes 410, 430, 470, as well as (approximately) the bases 33 of the rods 31, are substantially vertical.

The sense of the first angular motion of the arms 41, i.e. the sense forced by the cams 49 of the wheels 48, is towards the front region 1a, whereas the sense of the second angular motion, i.e. the return sense of the first springs 55, is towards the rear region 1 b.

The second springs 65 return the arms 41 towards the front region 1a.

The hydraulic pistons 14, 61, 68 are controllable by a user by means of suitable controls aboard the tractor 29. Likewise, controls for operation of the hydraulic motors 45 are provided aboard the tractor 29, in particular for selecting the rotation rate of the hydraulic motors 45. E.g., in an operation mode, the rotation rate of the hydraulic motors 45 is of 156 rpm with a wheel 48 having four cams 49. Therefore, the swinging frequency of the arms 41 is of 604 oscillations/minute.

It should be noted that the controls are operable even during use of the machine 1, whose operation is therefore continuously adaptable in real time to the features of the harvesting step.

As described above, the combination of the rotation of the cam wheels 48 and of the return of the springs 55 causes the arms 41 to move to and fro with a rotary reciprocating motion, which moves the shaking rods 31 with an analogous to-and-fro reciprocating motion (denoted by M1 in Figure 3), to which a vibration peculiar to the rods 31, due to their elasticity, is added. Vibration of the rods 31 may be increased by providing a slack connection between the rods 31 and the base 33 on which they are mounted; the slack connection is obtainable in particular by oversizing the holes of the bases 33 into which the rods 31 are inserted.

When, during the advancement of the machine 1, the two shaking units 3a, 3b encounter a plant 92 in the central region of the portal-shaped frame 10, the shaking rods 31 touch the branches of the plant 92 and, thanks to their motion of swinging and vibration, strike the branches with a certain force. Branch shaking causes the detaching of ripened fruits 91, which fall and are collected into the tanks 19.

Since, as mentioned, the shaking rods 31 of the two units 3a, 3b intersect each other in a resting condition, during harvesting the support bodies 43 and the arms 41 rotate around the axes 430 towards the rear region 1 b, so that the rods 31 of the two units 3a, 3b move away and allow the trunk of the plant 92 to pass through the portal 10 and come out from the rear region 1b. This rotation occurs spontaneously, thanks to the force that the trunk of the plant 92 exerts on the shaking units 3a, 3b. The second intermediate sections 31b and the third end sections 31c of the rods 31 are tilted towards the rear region 1b to facilitate the sliding of the rods 31 on the sides of the trunk and to prevent the trunk from remaining stuck against the rods 31. These contrivances allow to minimize the risk of damaging the plant 92.

When the trunk is past, the second springs 65 return the support bodies 43 and the arms 41 towards the first angular position (i.e., towards the front region 1a), preparing the machine 1 for another plant 92. The return force of the second springs 65 and the first angular position are adjustable by displacing the shields 67: this enables to adjust the force that the trunk has to exert on the arms 41 in order to be able to move them away and, accordingly, enables to adjust also the contact times and the striking force between the rods 31 and the branches of the plant 92, thereby adapting the operation of the machine 1 to the features of the plants 92. The striking force and frequency can be adjusted also by selecting the rate of the motors 45 and the dimensions and number of lobes 49 of the wheels 48, besides the return force of the first springs 55. In particular, the selection of shape and dimensions of the wheels 48 enables to select the extent of the angular swinging of the arms 41.

It should be noted that the cam wheel 48 is positioned behind the arm 41, therefore the branches of the plant 92 tend to push the arm 41 against the wheel 48 itself, assisting the return of the second motor apparatus (i.e. of the first springs 55). This configuration is particularly advantageous, as it avoids the risk (that would be present if the wheel 48 were in front of the arm 41) of loss of contact between arm 41 and wheel 48, which would cause irregular or even non-operating swinging. The stop elements 57 prevent the arm 41 from being rotated excessively forward relative to the support body 43 (with loss of contact with the cam wheel 48 and possible breakage of the spring 55) when a projecting branch impacts against the rods 31, or in case of wrong manoeuvres by the user. Of course, an excessive backward rotation of the arms 41 is prevented by abutment against the cam wheels 48.

As mentioned, the arm 41 may be pivoted on the support body 43 through a multidirectional articulated joint. In this case, the comb defined by the shaking rods 31 has further degrees of motion (though limited) allowing a further capability of spontaneous adapting to the features of the plant 92.

E.g., a certain rotation in a top-to-bottom direction (motion denoted by M2 in Figure 3) can be allowed for the arm 41. The extent of such a rotation is limited by the C-like shape of the stop element 57 partially encircling the arm 41, besides by the joint itself; said rotation of the arm 41 varies the horizontal tilt of the rods 31 and may be advantageous in case of a plant 92 having a uneven development in height.

Moreover, a rotation around its longitudinal axis 415 can be allowed for the arm 41. The extent of such a rotation is limited by the first spring 55, besides by the joint itself. Such a rotation of the arm 41 rotates the comb of rods 31 around the same axis 415 (motion denoted by M3 in Figure 3), causing the rods 31 at one end of the base 33 to be located more forward than the rods 31 at the other end of the base 33. This may be advantageous for a less rigid interaction with the plant 92, and in case the resistance offered by the branches is uneven in height. It should be noted also that during said rotation around the axis 415 the rod-shaped body 411 of the arm 41 rotates inside the removable case 42 (which is mounted slack on the rod-shaped body 411) and therefore there is no interference whatsoever with the motion of the cam wheel 48.

In case said rotation around the longitudinal axis 415 is allowed, the wings 34 avoid that a plant 92 or a post supporting the row of plants may remain stuck into an angle formed by an arm 41 and the respective base 33.

In fact, in particular at the entrance to a row, it might happen that the plant (or the supporting post) be off-centre relative to the central region of the portal 10, and that therefore the plant initially contacts the arm 41 instead of the shaking rods 31, i.e. it contacts a portion of arm 41 comprised between the base 33 and the support body 43.

In this case, if the arm 41 is rotated longitudinally so that the base 33 is not vertical, the sliding of the plant along the arm 41 would lead the plant to stick in the angle between the arm 41 itself and the base 33, from which it would not come free without damaging the device 1.

The presence of the wings 34 at the ends of the base 33 enables to avoid this problem: in case of such an off-centre relative to the central region, the plant or the post impacts against the nearer wing 34 even before impacting with the arm 41, thereby rotating the base 33 around the longitudinal axis 415 and bringing it back to a vertical position. Thanks to this, said angle between arm 41 and base 33 is brought back on a vertical plane and the plant (or the post) can slide along the arm 41 to the shaking rods 31, with no danger of remaining stuck in said angle.

To have a further possibility of adjusting the harvesting machine 1 and of adapting its operation to the plants 92, the support body 43 comprises a plurality of seats 435a, 435b for pivoting the arm 41. Therefore, the user can select, among said plurality of seats, the most suitable seat 435a or 435b for pivoting the arm 41. This allows to select the position of the pivot axis 410 relative to the cam wheel 48, and therefore to select said first and second angular position of the arm 41 relative to the support body 43.

For instance, Figures 7A and 7B show respectively the first angular position and the second angular position of an arm 41 which is pivoted at a first seat 435a, whereas Figures 8A and 8B show respectively the first angular position and the second angular position of an arm 41 which is pivoted at a second seat 435b which is different from the first seat 435a.

From a comparison between the figures, it should be noted that the arm 41 swings between positions having different angles depending on the pivot seat 435a, 435b. It is evident that said pivot seats may be of a number greater than two, and their position on the support body 43 can be selected according to design needs.

The possibility of pivoting the arm 41 at seats 435a, 435b alternative to each other allows, e.g., to select the angle of impact of the shaking rods 31 with the plants 92 and to vary the extent of how much the shaking rods 31 of the first shaking unit 3a intersect the shaking rods 31 of the second shaking unit 3b.

In the embodiment shown in Figure 9, the seats 435a, 435b are through holes in the support body 43; the arm 41 is removably pivotable at the seat 435a, 435b by the spherical stud 53 that is provided with a threaded shank 531, which is threaded into the seat 435a, 435b and locked therein by means of a nut 532 or the like.

The subject of the present disclosure has been hereto described with reference to an embodiment thereof. It is understood that other embodiments might exist, all falling within the protection scope of the claims hereinafter.

## Claims

1. A motive device (4) for shaking rods (31), comprising
- a support body (43);
- an arm (41) pivoted on the support body (43) around a pivot axis (410) and intended for bearing a plurality of shaking rods (31);
- a first motive or motor apparatus (45, 48) including a cam wheel (48) having at least one cam (49), the cam wheel (48) contacting the arm (41),
wherein the arm (41) extends in a substantially radial direction relative to the pivot axis (410), the arm (41) being rotatable in a reciprocating motion between a first angular position and a second angular position relative to the support body (43),
**characterized in that**
the motive device (4) further comprises a second motive or motor apparatus (55),
wherein the first motor apparatus (45, 48) is configured for implementing a first angular motion of the arm (41) towards the first angular position through a rotation of the cam wheel (48), and wherein the second motor apparatus (55) is configured for implementing a second angular motion of the arm (41) towards the second angular position, said second angular motion being in a sense opposite to the first angular motion.

2. The motive device (4) according to claim 1, wherein the second motor apparatus (55) comprises an elastic element (55) configured for returning the arm (41) towards the second angular position.

3. The motive device (4) according to claim 1 or 2, comprising a load-bearing framework (60, 62), wherein said support body (43) is hinged at a region (62) of said load-bearing framework (60, 62) around a hinge axis (430).

4. The motive device (4) according to claim 3, comprising a return apparatus (65) configured for angularly moving the support body (43) in a third angular motion relative to the load-bearing framework (60, 62).

5. The motive device (4) according to claim 4, comprising a slider (66, 67) which is displaceable relative to said region (62) of the load-bearing framework (60, 62), wherein said return apparatus (65) connects the support body (43) to said slider (66, 67).

6. The motive device (4) according to any one of claims 3 to 5, wherein said pivot axis (410) of the arm (41) and said hinge axis (430) of the support body (43) are substantially parallel to each other.

7. The motive device (4) according to claim 6, wherein the sense of said first angular motion of the arm (41) is concordant with the sense of the third angular motion of the support body (43).

8. The motive device (4) according to any one of claims 1 to 7, wherein the first motor apparatus (45, 48) comprises a motor (45) which is mounted on said support body (43).

9. The motive device (4) according to any one of claims 1 to 8, comprising a stop element (57) which is configured for stopping the first angular motion of the arm (41) past said first angular position.

10. The motive device (4) according to any one of claims 1 to 9, comprising a multidirectional articulated joint (51, 53), wherein the arm (41) is pivoted on the support body (43) through said multidirectional articulated joint (51, 53).

11. The motive device (4) according to any one of claims 1 to 10, wherein the support body (43) comprises a plurality of seats (435a, 435b) for pivoting the arm (41), the arm (41) being removably pivotable at one seat selected among said plurality of seats (435a, 435b).

12. The motive device (4) according to any one of claims 1 to 11, wherein the cam wheel (48) comprises at least three cams or lobes (49).

13. The motive device (4) according to any one of claims 1 to 12, wherein said arm (41) comprises a rod-shaped body (411) and a removable case (42), said rod-shaped body (411) being inserted into said removable case (42), wherein the removable case (42) is interposed between the rod-shaped body (411) and the cam wheel (48) for protecting the rod-shaped body (411) from wear.

14. A shaking unit (3, 3a, 3b), comprising a motive device (4) according to any one of claims 1 to 13 and a plurality of shaking rods (31) associated with said arm (41).

15. The shaking unit (3, 3a, 3b) according to claim 14, comprising an elongated base (33) mounted on the arm (41), wherein said shaking rods (31) are comb-like mounted on said elongated base (33).

16. The shaking unit (3, 3a, 3b) according to claim 15, comprising two wings (34), each being arranged at a respective end of the elongated base (33) and extending in a direction opposite to the shaking rods (31).

17. A harvesting machine (1) comprising at least one shaking unit (3, 3a, 3b) according to claim 14, 15 or 16.

18. The harvesting machine (1) according to claim 17, comprising a portal-shaped frame (10) and two shaking units (3a, 3b) associated with opposite sides (11, 12) of said portal-shaped frame (10), wherein said shaking rods (31) extend towards a central region of the portal-shaped frame (10).

19. The harvesting machine (1) according to claim 18, wherein said portal-shaped frame (10) is width-adjustable, the harvesting machine (1) comprising a distance-varying apparatus (13, 14) for varying a distance (L) between said opposite sides (11, 12).

## Patentansprüche

1. Eine Vorrichtung (4) zum Schütteln von Stäben (31), umfassend
- einen Stützkörper (43);
- einen Arm (41), der auf dem Stützkörper (43) um eine Schwenk- bzw. Drehachse (410) drehbar gelagert ist und bestimmt ist zum Tragen von mehreren Schüttelstäben (31);
- eine erste Antriebs- oder Motoreinrichtung (45, 48), die ein Nockenrad (48) beinhaltet, das zumindest eine Nocke (49) aufweist, wobei das Nockenrad (48) den Arm (41) kontaktiert,
wobei sich der Arm (41) im Wesentlichen in eine radiale Richtung relativ zur Drehachse (410) erstreckt, und der Arm (41) drehbar in einer erwidernden Bewegung zwischen einer ersten Winkelposition und einer zweiten Winkelposition relativ zum Stützkörper (43) gelagert ist,
**dadurch gekennzeichnet, dass**
die Vorrichtung (4) des Weiteren eine zweite Antriebs- oder Motoreinrichtung (55) umfasst,
wobei die erste Motoreinrichtung (45, 48) zum Ausführen einer ersten Winkelbewegung des Arms (41) bezüglich der ersten Winkelposition durch eine Drehung des Nockenrads (48) ausgebildet ist, und wobei die zweite Motoreinrichtung (55) zum Ausführen einer zweiten Winkelbewegung des Arms (41) bezüglich der zweiten Winkelposition ausgebildet ist, wobei die zweite Winkelbewegung bezüglich der ersten Winkelbewegung entgegengesetzt verfolgt.

2. Vorrichtung (4) gemäß Anspruch 1, wobei die zweite Motoreinrichtung (55) ein elastisches Element (55) umfasst, das zum Rückführen des Arms (41) hin zur zweiten Wickelposition ausgebildet ist.

3. Vorrichtung (4) gemäß Anspruch 1 oder 2, umfassend einen Tragrahmen (60, 62), wobei der Stützkörper (43) gelenkig in einem Bereich (62) des Tragrahmens (60, 62) um eine Gelenkachse (430) gelagert ist.

4. Vorrichtung (4) gemäß Anspruch 3, umfassend eine Rückführeinrichtung (65), die zum Bewegen des Stützkörpers (43) unter einem bestimmten Winkel in einer dritten Winkelbewegung relativ zum Tragrahmen (60, 62) ausgebildet ist.

5. Vorrichtung (4) gemäß Anspruch 4, umfassend einen Schieber (66, 67), der bezüglich des Bereichs (62) des Tragrahmens (60, 62) verschiebbar ist, wobei die Rückführeinrichtung (65) den Stützkörper (43) mit dem Schieber (66, 67) verbindet.

6. Vorrichtung (4) gemäß einem der Ansprüche 3 bis 5, wobei die Drehachse (410) des Arms (41) und die Gelenkachse (430) des Stützkörpers (43) im Wesentlichen parallel zueinander sind.

7. Vorrichtung (4) gemäß Anspruch 6, wobei die erste Winkelbewegung des Arms (41) konkordant ist mit der dritten Winkelbewegung des Stützkörpers (43).

8. Vorrichtung (4) gemäß einem der Ansprüche 1 bis 7, wobei die erste Motoreinrichtung (45, 48) einen Motor (45) umfasst, der auf dem Stützkörper (43) befestigt ist.

9. Vorrichtung (4) gemäß einem der Ansprüche 1 bis 8, umfassend ein Stoppelement bzw. Anschlag (57), der zum Begrenzen der ersten Winkelbewegung des Arms (41) bei Erreichen der ersten Winkelposition ausgebildet ist.

10. Vorrichtung (4) gemäß einem der Ansprüche 1 bis 9, umfassend ein multidirektional gelenkig ausgebildetes Verbindungselement (51, 53), wobei der Arm (41) mittels des multidirektional gelenkig ausgebildeten Verbindungselements (51, 53) um den Stützkörper (43) drehbar gelagert ist.

11. Vorrichtung (4) gemäß einem der Ansprüche 1 bis 10, wobei der Stützkörper (43) mehrere Aufnahmen (435a, 435b) zum drehbaren Lagern des Arms (41) umfasst, und wobei der Arm (41) herausnehmbar aus und drehbar in einer der aus den mehreren Aufnahmen (435a, 435b) ausgewählten Aufnahmen (435a, 435b) gelagert ist.

12. Vorrichtung (4) gemäß einem der Ansprüche 1 bis 11, wobei das Nockenrad (48) zumindest drei Nocken oder Exzenterelemente (49) umfasst.

13. Vorrichtung (4) gemäß einem der Ansprüche 1 bis 12, wobei der Arm (41) einen stabförmigen Körper (411) und eine austauschbare Hülle (42) umfasst, und der stabförmige Körper (411) in die austauschbare Hülle (42) eingesetzt ist und wobei die austauschbare Hülle (42) zwischen dem stabförmigen Körper (411) und dem Nockenrad (48) zum Schutz des stabförmigen Körpers (411) vor Verschleiß eingesetzt ist.

14. Eine Schütteieinheit (3, 3a, 3b), umfassend eine Vorrichtung (4) gemäß einem der Ansprüche 1 bis 13 und mehrere Schüttelstäbe (31), die mit dem Arm (41) verbunden sind.

15. Schütteleinheit (3, 3a, 3b) gemäß Anspruch 14, umfassend ein langgestrecktes Basiselement (33), das am Arm (41) befestigt ist, wobei die Schüttelstäbe (31) kammartig an dem langgestreckten Basiselement (33) befestigt sind.

16. Schütteleinheit (3, 3a, 3b) gemäß Anspruch 15, umfassend zwei Flügelelemente (34), wobei jede an einem entsprechenden Ende des langgestreckten Basiselements (33) angeordnet ist und sich in eine Richtung entgegengesetzt zu den Schüttelstäben (31) erstreckt.

17. Eine Erntemaschine (1), die zumindest eine Schütteleinheit (3, 3a, 3b) gemäß den Ansprüchen 14, 15 oder 16 umfasst.

18. Erntemaschine (1) gemäß Anspruch 17, umfassend einen tor- bzw. portalförmig ausgebildeten Rahmen (10) und zwei Schütteleinheiten (3a, 3b), die mit den gegenüberliegenden Seitenelementen (11, 12) des torförmigen Rahmens (10) verbunden sind, wobei sich die Schüttelstäbe (31) in Richtung eines zentralen Bereichs des torförmigen Rahmens (10) erstrecken.

19. Erntemaschine (1) gemäß Anspruch 18, wobei der torförmige Rahmen (10) breitenverstellbar ist, und wobei die Erntemaschine (1) eine Abstandseinstelleinrichtung (13, 14) umfasst zum Einstellen eines Abstands (L) zwischen den gegenüberliegenden Seitenelementen (11, 12),

## Revendications

1. Dispositif moteur (4) pour des tiges de secouage (31) comprenant
- un corps de support (43) ;
- un bras (41) pivoté sur le corps de support (43) autour d'un axe de pivot (410) et prévu pour supporter une pluralité de tiges de secouage (31) ;
- un premier appareil moteur ou de moteur (45, 48) comprend une roue à cames (48) ayant au moins une came (49), la roue à cames (48) étant en contact avec le bras (41),
dans lequel le bras (41) s'étend dans une direction sensiblement radiale par rapport à l'axe de pivot (410), le bras (41) pouvant tourner selon un mouvement réciproque entre une première position angulaire et une seconde position angulaire par rapport au corps de support (43),
**caractérisé en ce que**
le dispositif moteur (4) comprend en outre un second appareil moteur ou de moteur (55),
dans lequel le premier appareil de moteur (45, 48) est configuré pour mettre en oeuvre un premier mouvement angulaire du bras (41) vers la première position angulaire par le biais d'une rotation de la roue à cames (48), et dans lequel le second appareil à moteur (55) est configuré pour mettre en oeuvre un deuxième mouvement angulaire du bras (41) vers la seconde position angulaire, ledit deuxième mouvement angulaire étant dans un sens opposé au premier mouvement angulaire.

2. Dispositif moteur (4) selon la revendication 1, dans lequel le second appareil de moteur (55) comprend un élément élastique (55) configuré pour ramener le bras (41) vers la seconde position angulaire.

3. Dispositif moteur (4) selon la revendication 1 ou 2, comprenant un châssis de support de charge (60, 62), dans lequel ledit corps de support (43) est articulé au niveau d'une région (62) dudit châssis de support de charge (60, 62) autour d'un axe de charnière (430).

4. Dispositif moteur (4) selon la revendication 3, comprenant un appareil de retour (65) configuré pour déplacer angulairement le corps de support (43) dans un troisième mouvement angulaire par rapport au châssis de support de charge (60, 62).

5. Dispositif moteur (4) selon la revendication 4, comprenant une glissière (66, 67) qui est déplaçable par rapport à ladite région (62) du châssis de support de charge (60, 62), dans lequel ledit appareil de retour (65) raccorde le corps de support (43) à ladite glissière (66, 67).

6. Dispositif moteur (4) selon l'une quelconque des revendications 3 à 5, dans lequel ledit axe de pivot (410) du bras (41) et ledit axe de charnière (430) du corps de support (43) sont sensiblement parallèles entre eux.

7. Dispositif moteur (4) selon la revendication 6, dans lequel le sens dudit premier mouvement angulaire du bras (41) est concordant avec le sens du troisième mouvement angulaire du corps de support (43).

8. Dispositif moteur (4) selon l'une quelconque des revendications 1 à 7, dans lequel le premier appareil de moteur (45, 48) comprend un moteur (45) qui est monté sur ledit corps de support (43).

9. Dispositif moteur (4) selon l'une quelconque des revendications 1 à 8, comprenant un élément de butée (57) qui est configuré pour arrêter le premier mouvement angulaire du bras (41) au-delà de ladite première position angulaire.

10. Dispositif moteur (4) selon l'une quelconque des revendications 1 à 9, comprenant un joint articulé multidirectionnel (51, 53), dans lequel le bras (41) est pivoté sur le corps de support (43) par le biais dudit joint articulé multidirectionnel (51, 53).

11. Dispositif moteur (4) selon l'une quelconque des revendications 1 à 10, dans lequel le corps de support (43) comprend une pluralité de sièges (435a, 435b) pour faire pivoter le bras (41), le bras (41) pouvant être pivoté de manière amovible au niveau d'un siège sélectionné parmi ladite pluralité de sièges (435a, 435b).

12. Dispositif moteur (4) selon l'une quelconque des revendications 1 à 11, dans lequel la roue à cames (48) comprend au moins trois cames ou lobes (49).

13. Dispositif moteur (4) selon l'une quelconque des revendications 1 à 12, dans lequel ledit bras (41) comprend un corps en forme de tige (411) et un boîtier amovible (42), ledit corps en forme de tige (411) étant inséré dans ledit boîtier amovible (42), dans lequel le boîtier amovible (42) est intercalé entre le corps en forme de tige (411) et la roue à cames (48) pour protéger le corps en forme de tige (411) contre l'usure.

14. Unité de secouage (3, 3a, 3b) comprenant un dispositif moteur (4) selon l'une quelconque des revendications 1 à 13, et une pluralité de tiges de secouage (31) associées audit bras (41).

15. Unité de secouage (3, 3a, 3b) selon la revendication 14, comprenant une base allongée (33) montée sur le bras (41), dans lequel lesdites tiges de secouage (31) sont montées à la manière d'un peigne sur ladite base allongée (33).

16. Unité de secouage (3, 3a, 3b) selon la revendication 15, comprenant deux ailes (34), chacune étant agencée à une extrémité respective de la base allongée (33) et s'étendant dans une direction opposée aux tiges de secouage (31).

17. Machine de récolte (1) comprenant au moins une unité de secouage (3, 3a, 3b) selon la revendication 14, 15 ou 16.

18. Machine de récolte (1) selon la revendication 17, comprenant un bâti en forme de portail (10) et deux unités de secouage (3a, 3b) associées aux côtés opposés (11, 12) dudit bâti en forme de portail (10), dans lequel lesdites tiges de secouage (31) s'étendent vers une région centrale du bâti en forme de portail (10).

19. Machine de récolte (1) selon la revendication 18, dans laquelle ledit bâti en forme de portail (10) est ajustable en largeur, la machine de récolte (1) comprenant un appareil de variation de distance (13, 14) pour modifier une distance (L) entre lesdits côtés opposés (11, 12).
